# EUROPÄISCHE PATENTSCHRIFT

(11) **EP 1 809 791 B1**
(45) Veröffentlichungstag und Bekanntmachung des Hinweises auf die Patenterteilung: **23.01.2008**
(21) Anmeldenummer: 05783852.6
(22) Anmeldetag: 20.09.2005
(51) Int. Cl.: C23G 1/08, C11D 1/44, C11D 3/20, C11D 3/33, C11D 11/00, B23K 26/00

(54) **VERFAHREN ZUR ENTFERNUNG VON LASERZUNDER**
METHOD FOR REMOVING LASER SCALES
PROCEDE D'ELIMINATION DE BATTITURES PROVENANT DE LASER

(30) Priorität: 25.09.2004 DE 102004046737
(43) Veröffentlichungstag der Anmeldung: 25.07.2007
(73) Patentinhaber: Chemetall GmbH, 60487 Frankfurt am Main (DE)
(72) Erfinder: FISCHER, Peter, CH-5422 Oberehrendingen (CH); BRUNNER, Hanspeter, CH-5406 Baden (CH)
(74) Vertreter: Hübner, Günter
(86) Internationale Anmeldenummer: PCT/EP2005/010117
(87) Internationale Veröffentlichungsnummer: WO 2006/039983

(56) Entgegenhaltungen:
- EP-A- 0 104 012
- FR-A- 1 506 468
- US-A- 5 653 917
- US-A- 5 909 742
- US-A1- 2002 189 632

## Beschreibung

Die Erfindung betrifft ein Verfahren zum Entfetten, zum Beizen oder/und zur Entfernung von Laserzunder an eisenhaltigen Metallteilen, insbesondere durch Spritzen.

Das Schneiden von eisenhaltigen Metallen mittels Lasertechnik findet vermehrt Einsatz in der blechverarbeitenden Industrie. Ein Vorteil der Laserschneidetechnik ist deren Schnelligkeit, was die Produktionszeiten in der blechverarbeitenden Industrie verkürzt. Heute werden immer mehr metallische Werkstücke, insbesondere Bleche, mit Laser geschnitten.

Beim Laserschneiden mit Sauerstoff als Betriebsgas entsteht an den Metallschnittkanten Eisenoxid (Zunder). Laserzunder ist spröde und hat eine schlechte Haftung zum Untergrund. Werden solch zugeschnittene Blechteile lackiert, ohne dass dieser Zunder vorher entfernt wurde, weist der Lack auf diesen Kanten eine schlechte bis gar keine Haftung auf und platzt leicht ab. Dieses Problem entsteht erst mit dem Einsatz der Laserschneidetechnik, denn bei der herkömmlichen Schneidetechnik wurde an den Metallschnittkanten in der Regel kein Zunder gebildet. Solche Teile waren vor dem Lackieren nur zu entfetten, um die Lackhaftung zu gewährleisten.

Fazit: Die moderne und wünschenswerte Laserschneidetechnik, bei der Sauerstoff als Betriebsgas eingesetzt werden muss, geht einher mit einer aufwändigen Vorbehandlung vor dem Lackieren bzw. Pulverbeschichten. Als Vorbehandlungsmethoden zur Entfernung des Zunders kommen z.B. mechanische Verfahren wie Sandstrahlen oder Staubstrahlen in Betracht. Solche mechanischen Verfahren sind jedoch zeitaufwändig und problematisch bezüglich der Maßhaltigkeit der Teile.

Eine andere Methode, den Zunder zu entfernen, ist das chemische Beizen mit Säure. Dazu wird das Blech mit dem Zunder in ein entsprechendes Bad getaucht. Problemlos ist dies bei der Verwendung von Vorbehandlungsanlagen, die im Tauchverfahren arbeiten und eine Beizzone integriert haben. Bekannt sind z.B. Phosphorsäurebeizbäder mit lonentausch-Geräten.

Nicht überall wird die Blechvorbehandlung mit Tauchverfahren durchgeführt. So hat sich für die Vorbehandlung neben dem Tauchverfahren auch das Spritzverfahren etabliert. Beim Spritzverfahren werden die zu behandelnden Teile mit den entsprechenden Lösungen bespritzt. Das Spritzverfahren bietet den großen Vorteil, dass in den entsprechenden Anlagen die Teile einzeln an Transportketten gehängt werden können. Die Teile bleiben bis nach dem Lackieren an diesen Ketten hängen. (Dies steht im Gegensatz zur Tauchbehandlung. Dort findet die Behandlung meist in Arbeitskörben statt, und die Teile werden nach der Vorbehandlung vor der Lackierung aufgehängt.) Prozesse wie Entfetten, Entfetten/Phosphatieren, Phosphatieren usw. sind im Spritzverfahren Stand der Technik. Das Beizen von Aluminium im Spritzverfahren ist ebenfalls bekannt und verfahrenstechnisch beherrschbar.

Das Beizen und Entzundern von Stahl wird indes sehr selten im Spritzverfahren ausgeführt. Dies liegt hauptsächlich daran, dass die in einer Spritzanlage verfügbaren Behandlungszeiten für ein Beizen in der Regel zu kurz sind. Weiterhin ist es problematisch, die gebeizten Teile ohne erneutes Anrosten über die Spülzonen in die nächste Behandlungsstufe zu bringen. Phosphorsäurebeizlösungen ergeben schon nach Aufnahme von wenigen Gramm Eisen weiße, schwer lösliche Rückstände insbesondere von Eisen-(III)-phosphat, die die Anlage verkrusten können. Im folgenden Spülbad erfolgt - bedingt durch normale Produkteverschleppung von Zone zu Zone - zusätzlich eine meistens unerwünschte, nicht beherrschbare Eisenphosphatierung, die z.B. das Aufbringen einer Zinkphosphatierung verhindert. Eine Spritzbeize auf Basis von Phosphorsäure ist somit für das Beizen und Entzundern eisenhaltiger Metalle weniger geeignet. Außerdem ist eine Phosphatbelastung des Abwassers unerwünscht.

Schwefelsäure, die zum Beizen von Aluminium im Spritzverfahren eingesetzt wird, ist für Stahl wegen der Empfindlichkeit auf das Wieder-Artrosten im Spülprozess kaum einzusetzen. Denn die Spritzatmosphäre ist außerordentlich korrosiv, da sie nicht nur Schwefelsäure enthält, sondern zusätzlich Fe³⁺ als starkes Oxidationsmittel, so dass sogar einzelne Edelstahllegierungen unter bestimmten Bedingungen angegriffen werden können. Deswegen müssten sämtliche Teile der Anlage aus einem Material hergestellt werden, das gegen diese besonders korrosiven Lösungen beständig ist, was für sich genommen schon einen kaum vertretbaren Aufwand generiert. Zudem sind Salze der Phosphor- und der Schwefelsäure abwassertechnisch problematisch und unerwünscht. Außerdem greifen sulfathaltige Abwässer auch Beton stark an.

Mittels Laserschneidetechnik hergestellte Bleche, insbesondere bei einem Gehalt von Sauerstoff im Betriebsgas zur Laserbearbeitung, sind im Spritzverfahren aufgrund der beschriebenen Probleme mit Phosphorsäure oder Schwefelsäure nicht zu behandeln.

US 5,653,917 lehrt eine Zusammensetzung zum Entfernen von Rost, die Alkalihydrogencitrat, Wasser und gegebenenfalls Citronensäure enthält.

US 5,909,742 beschreibt ein Reinigungsverfahren für metallische Oberflächen unter Verwendung einer Zusammensetzung auf Basis von Citronensäure, einer Hydroxycarbonsäure, einem nichtionischen Tensid und einem Haftvermittler.

Aufgabe der Erfindung ist es, die Nachteile des Standes der Technik zu überwinden und ein Verfahren bereitzustellen, mit dem sich auf eisenhaltigen Metalloberflächen, insbesondere auf Stahlteilen wie z.B. Stahlblechen oder Stahlplatten befindlicher Laserzunder oder/und andere, insbesondere oxidische Verschmutzungen auf relativ einfache Art und Weise entfernen lassen.

Gelöst wird die Aufgabe durch ein Verfahren zum Entfetten, zum Beizen oder/und zur Entfernung von Laserzunder an Oberflächen von eisenhaltigen Metallteilen, das dadurch gekennzeichnet ist, dass die eisenhaltigen, gegebenenfalls mit Laserzunder behafteten Oberflächen von metallischen Teilen mit einer wässerigen Lösung (Beizlösung oder/und Entfettungslösung), die mindestens eine Carbonsäure, die stark wasserlöslich ist und Fe-Ionen komplexiert, und mindestens ein Salz von mindestens einer derartig wirkenden Carbonsäure sowie mindestens ein Fettaminethoxylat enthält, behandelt werden, wobei die Lösung gepuffert wird, wobei Fe-lonen in die Lösung gelangen und zumindest teilweise komplexiert werden, wobei der pH-Wert der Lösung zum Beizen einen gegenüber mindestens einer der enthaltenen Carbonsäuren erhöhten pH-Wert aufweist und wobei die Gesamtkonzentration an den Carbonsäuren und an den Salzen der Carbonsäuren zum Beizen 2 bis 20 Gew.-% beträgt.

Im Folgenden wird das Entfernen von Laserzunder auch als eine Variante des Entfettens oder/und Beizens angesprochen und ist bei diesen Beschreibungen umfasst.

Vorzugsweise liegt die Gesamtkonzentration an den Carbonsäuren und an den Salzen der Carbonsäuren zum Beizen im Bereich von 2,5 bis 18 Gew.-%, 5 bis 20 Gew.-%, 7 bis 15 Gew.-%, oder 2 bis 12 Gew.-%.

Bevorzugt liegt der pH-Wert insbesondere zum Beizen im Bereich von 2,5 bis 4,0 oder von 2,5 bis 3,5, besonders bevorzugt im Bereich von 2,8 bis 3,2, insbesondere, wenn Citronensäure und Citrat verwendet werden.

Es wird eine gepufferte Lösung eingesetzt, bei der mindestens eine der eingesetzten Carbonsäuren teilneutralisiert oder neutralisiert ist, insbesondere alle eingesetzten Carbonsäuren teilneutralisiert sind. Vorzugsweise wird zur Pufferung mindestens eine Natrium- oder/und Kaliumverbindung zugesetzt, obwohl grundsätzlich viele Arten von Verbindungen, die eine geeignete Pufferung über entsprechende Kationen ermöglichen, bekannt sind, z.B. Amin-Verbindungen wie z.B. ein Alkanolamin, die Ammoniumionen bilden. Insbesondere werden hierzu jedoch Natrium- oder/und Kaliumsalze der Carbonsäure(n) verwendet. Vorzugsweise enthält die erfindungsgemäße Lösung nur Salze von Carbonsäuren, die als Carbonsäuren in dieser Lösung enthalten sind. Besonders bevorzugt enthält die erfindungsgemäße Lösung im Wesentlichen nur eine einzige Carbonsäure, die eine Hydroxycarbonsäure ist. Besonders bevorzugt ist dann das mindestens eine Salz der Carbonsäure mindestens ein Salz dieser Hydroxycarbonsäure. Vorzugsweise enthält die Lösung einen Gehalt an Hydroxycarbonsäure(n) und Salz(en) von Hydroxycarbonsäure(n), insbesondere an Citronensäure und Citrat(en), zum Entfetten im Bereich von insgesamt 0,1 bis 20 Gew.-% oder zum Beizen im Bereich von insgesamt 2 bis 20 Gew.-%.

Vorzugsweise ist die Carbonsäure der erfindungsgemäßen Lösung eine Hydroxycarbonsäure oder/und ist das Salz der Carbonsäure das Salz einer Hydroxycarbonsäure. Besonders bevorzugt sind alle Carbonsäuren der erfindungsgemäßen Lösung Hydroxycarbonsäuren und sind alle Salze der Carbonsäuren Salze der Hydroxycarbonsäuren. Vorteilhafterweise enthält die Lösung (Beizlösung oder/und Entfettungslösung) Citronensäure oder/und mindestens eines ihrer Salze. Vorzugsweise sind mindestens 50 Gew.-%, besonders bevorzugt mindestens 75 Gew.-% der Carbonsäuren bzw. der Carbonsäuresalze Citronensäure bzw. Citrate. Vorzugsweise beträgt die Gesamtkonzentration an Citronensäure und Citraten in der Lösung 2,5 bis 15 Gew.-%.

Fettaminethoxylate haben sich als Tenside für diesen Einsatzzweck herausragend bewährt, da sie eine besonders gleichmäßige Benetzung der metallischen Oberfläche ermöglichen und dabei die Säure von der metallischen Oberfläche fernhalten. Sie haben je nach Kettenlänge kationische oder nichtionische Tensideigenschaften. Besonders bevorzugt werden als Fettaminethoxylate Kokosfettaminethoxylate eingesetzt. Die Zugabemenge der Fettaminethoxylate zu der erfindungsgemäßen Lösung liegt bevorzugt im Bereich von 0,05 bis 0,5 Gew.-% (Entfettungslösung oder/und Beizlösung), kann jedoch zum Entfetten in Gegenwart von mindestens einem anderen Tensid auch mindestens 0,005 Gew.-% betragen. Sie ist damit in vielen Fällen sehr hoch. Der ungewöhnlich hohe Gehalt an Tensiden in der Beizlösung ist hilfreich, um die Rostbildung auf der metallischen Oberfläche nach dem Beizen zu unterdrücken. Als das mindestens eine weitere Tensid, das gegebenenfalls neben dem mindestens einen Fettaminethoxylat verwendet werden kann, kann prinzipiell jedes handelsübliche Tensid eingesetzt werden, sofern die Schaumwirkung des jeweiligen Tensids Null, sehr gering oder gut beherrschbar ist oder/und sogar entschäumend wirkt. Bevorzugt ist das mindestens eine weitere Tensid ein kationisches oder/und ein nichtionisches Tensid.

Der Gehalt an Fettaminethoxylaten beträgt bei den erfindungsgemäßen Lösungen (Entfettungs- oder/und Beizlösungen) vorzugsweise jeweils mindestens 50 Gew.-% des Gesamtgehalts an allen Tensiden, vorzugsweise jeweils mindestens 70 oder mindestens 90 Gew.-%, gegebenenfalls nahezu oder genau 100 Gew.-%.

Vorzugsweise besteht die erfindungsgemäße wässerige Lösung (Beizlösung/Entfettungslösung), die als Badlösung eingesetzt wird, im wesentlichen aus mindestens einer Carbonsäure, die stark wasserlöslich ist und Fe-lonen komplexiert, aus mindestens einem Salz von mindestens einer derartig wirkenden Carbonsäure wie z.B. Hydroxycarbonsäure bzw. deren Salz, insbesondere Citronensäure bzw. Citrat, aus mindestens einem Fettaminethoxylat und aus mindestens einer das chemische System (die Lösung) puffernden Substanz wie z.B. mindestens einer Art Kationen, insbesondere ausgewählt aus Ammoniumionen und mindestens einer Art von Alkalimetallionen wie z.B. Natrium- oder/und Kaliumionen, zum Puffern des chemischen Systems, sowie jeweils optional aus mindestens einem weiteren Tensid, aus mindestens einem Komplexbildner zur Vermeidung von Farbschichten wie z.B. einer Verbindung auf Basis Nitrilotriessigsäure, aus mindestens einem Beizinhibitor wie z.B. auf Basis von Thioharnstoffderivaten, aus mindestens einem Fluorid in Mengen bis etwa 0,01 Gew.-%, aus mindestens einem Komplexfluorid bis etwa 0,01 Gew.-% oder/und aus mindestens einem weiteren Additiv. Hierbei kann zur Pufferung mindestens eine Ammoniumionen bildende Stickstoff-haltige Verbindung, beispielsweise mindestens ein Amin, insbesondere mindestens ein Mono- oder Triamin, zugesetzt werden. Als die mindestens eine zur Pufferung zuzugebende Substanz ist ein Zusatz von mindestens einer Natrium- oder/und Kaliumverbindung besonders bevorzugt. Die mindestens eine puffernde Substanz kann gegebenenfalls auch zur Einstellung des pH-Werts eingesetzt werden. Der Gehalt der mindestens einen puffernden Substanz in der erfindungsgemäßen Lösung liegt häufig im Bereich von 0,05 bis 8 Gew.-%, bevorzugt im Bereich von 0,5 bis 6 Gew.-%.

Als Carbonsäuren bzw. deren Salze kommen grundsätzlich alle Carbonsäuren bzw. alle Salze von Carbonsäuren in Frage, die eine starke Wasserlöslichkeit (mindestens 50 g/L Wasser bei Raumtemperatur, vorzugsweise mindestens 120 oder mindestens 180 g/L, besonders bevorzugt mindestens 250 g/L) und eine starke Komplexierungswirkung für Fe-Ionen aufweisen. Dies können beispielsweise Mono-, Di-, Tri- oder/und Polycarbonsäuren, Mono-, Di-, Trioder/und Polyhydroxycarbonsäuren und deren Derivate sein. Besonders bevorzugt sind dabei solche, die Fe-Ionen gut fällen, bei denen sich die Fällungsprodukte leicht abfiltern lassen und bei denen umweltfreundliche Verbindungen vorliegen, insbesondere Hydroxycarbonsäuren und deren Salze, vor allem Citronensäure und Citrate. Weitere bevorzugte Carbonsäuren sind beispielsweise Äpfelsäure, Bernsteinsäure, Gluconsäure, Glykolsäure, Malonsäure, Milchsäure oder/und Weinsäure. Weitere bevorzugte Salze sind beispielsweise die Salze der Äpfelsäure, Bernsteinsäure, Gluconsäure, Glykolsäure, Malonsäure, Milchsäure oder/und Weinsäure. Besonders bevorzugt ist, dass wenigstens ein Teil der Carbonsäuren bzw. der Salze Citronensäure bzw. Citrate sind.

Die Pufferung in der erfindungsgemäßen Lösung ist hierbei wesentlich. Hierdurch wird eine Teilneutralisierung oder Neutralisierung von mindestens einer Carbonsäure und eine Salzbildung erreicht.

Die Pufferung der Carbonsäure(n) - insbesondere der Citronensäure - in der Beizlösung oder in einer sauren Entfettungslösung insbesondere auf pH-Werte im Bereich von 2,5 bis 4,0 oder 2,5 bis 3,5 führt dazu, dass dadurch ein vergleichsweise enger und leicht erhöhter pH-Wertebereich eingestellt wird, der einen sehr guten und für das Arbeiten sicheren Arbeitsbereich darstellt. Dadurch kann Citrat gebildet werden. Stärker konzentrierte Citronensäurelösung hat ungepuffert einen pH-Wert von etwa 2,0. Die Einstellung des pH-Werts kann in vorteilhafter Weise durch Zusatz von Natron- oder/und Kalilauge erfolgen.

Ammoniumionen, die gegebenenfalls auch über die Amin-Verbindung freigesetzt werden, können jedoch oberhalb eines pH-Wertes von 3,5 stärkeren Geruch verursachen, weshalb Natrium oder/und Kalium bevorzugt sind. Als Amin-Verbindung kann grundsätzlich jede Art von Amin-Verbindung eingesetzt werden, die für die Pufferung geeignet ist, insbesondere ein Mono-, Di- oder/und Triamin wie z.B. Monoethanolamin.

Der Zusatz mindestens eines weiteren Komplexbildners wie z.B. auf Basis von Nitrilotriessigsäure NTA, insbesondere mindestens eines besonders starken Komplexbildners, kann hilfreich sein, um gegebenenfalls entstehende Farbschichten zu vermeiden bzw. zu entfernen. Er kann auch helfen, um den Carbonsäuresalz-Komplex noch stabiler zu gestalten. Dieser weitere Komplexbildner kann in einem Gehalt insbesondere im Bereich von 0,01 bis 5 Gew.-% in der Entfettungs- oder/und in der Beizlösung enthalten sein.

Der Zusatz eines Beizinhibitors zur Beizlösung ist in der Regel nicht erforderlich. Es können jedoch in seltenen Fällen besondere Umstände vorliegen, bei denen ein solcher Zusatz hilfreich ist.

Der Zusatz eines Fluorids oder/und eines Komplexfluorids zur Beizlösung, jeweils in Mengen bis etwa 0,01 Gew.-% können in einzelnen Fällen helfen, das Beizen zu beschleunigen.

Der Zusatz von mindestens einem organischen Lösemittel oder/und von jeweils mindestens einem Additiv wie z.B. einem Biozid, einem Emulgator, einem Emulsionsspalter, einem Entschäumer, einem Geruchsstoff, einem Lösungsvermittler oder/und von einem Oxidationsmittel kann in manchen Fällen gewünscht sein. Die Mengen an organischen Lösemitteln in der Entfettungslösung sollten jedoch möglichst auf Gehalte von bis zu 0,1 Gew.-% an allen Arten an organischen Lösemitteln bzw. von meist bis zu jeweils etwa 0,01 Gew.-% oder bis zu 0,1 Gew.-% pro Additiv begrenzt sein. Besonders bevorzugt ist, die Lösung frei oder im Wesentlichen frei von organischen Lösemitteln oder/und von Enzymen zu halten.

Vorzugsweise enthält die erfindungsgemäße Lösung neben mindestens einer Art Kation (Verbindung) zum Puffern des chemischen Systems auch mindestens eine weitere Verbindung ausgewählt aus der Gruppe, die aus weiteren Komplexbildnern, Beizinhibitoren, Fluoriden, Komplexfluoriden, organischen Lösemitteln, Bioziden, Emulgatoren, Emulsionsspaltern, Entschäumern, Geruchsstoffen, Lösungsvermittlern und Oxidationsmitteln besteht.

Darüber hinaus könnten der wässerigen Lösung verschiedenste Substanzen zugesetzt werden, beispielsweise mindestens ein organisches Lösemittel wie Alkohol, mindestens ein Öl oder/und mindestens ein weiteres Additiv. Es hat sich jedoch bei den ersten Versuchen gezeigt, dass anders als bei vielen anderen Substanzgemischen der Oberflächentechnik derartige Zusätze nicht notwendig sind, ja gegebenenfalls sogar stören können. Daher ist ein Zusatz von solchen weiteren Substanzen, wie eben genannt, nicht bevorzugt oder gar gänzlich zu vermeiden oder möglichst gering zu halten, beispielsweise, wenn solche Substanzen eingeschleppt werden sollten. Denn trotz seiner Einfachheit hat sich das erfindungsgemäße chemische System außerordentlich bewährt.

Vorzugsweise besteht die erfindungsgemäße Lösung im Wesentlichen nur oder besteht nur aus den oben genannten Verbindungsgruppen.

Darüber hinaus ist es bevorzugt, dass die erfindungsgemäßen Lösungen weitgehend oder gänzlich frei sind von Phosphorsäure, Salzsäure und Schwefelsäure.

Das Entfetten findet vorzugsweise bei Temperaturen im Bereich von 10 bis 90 °C, besonders bevorzugt im Bereich von 25 bis 70 °C, insbesondere im Bereich von 40 bis 60 °C, statt. Das Beizen findet vorzugsweise bei Temperaturen im Bereich von 10 bis 80 °C, besonders bevorzugt im Bereich von 25 bis 70 °C, insbesondere im Bereich von 30 bis 65 °C, statt. Falls jedoch die Temperatur beim Beizen zu hoch gewählt werden sollte, können in der sauren Wasserdampfatmosphäre ein Rosten oder/und eine Fleckenbildung einsetzen.

In einer bevorzugten Ausführungsform der Erfindung bestehen die eisenhaltigen Metallteile aus Stahl. Insbesondere sind dies die verschiedensten üblichen Stahllegierungen, aber es könnte auch eine Edelstahllegierung behandelt werden. Hierbei ist es jedoch üblicherweise unerwünscht, dass die metallische Oberfläche mit einer Passivierungsschicht, die oft durch eine Farbschicht erkennbar ist, versehen wird.

Die erfindungsgemäß behandelten Teile können beispielsweise Bänder (Coils), Bleche, Blechzuschnitte, Blankstahlteile, Schwarzstahlteile, Formkörper oder/und gelaserte Bleche sein, wobei grundsätzlich alle Arten an Stahlteilen mit dem erfindungsgemäßen Verfahren behandelt werden können.

Die Behandlung der metallischen Oberflächen mit der erfindungsgemäßen wässerigen Lösung kann grundsätzlich einstufig oder mehrstufig erfolgen.

Bei einem einstufigen Verfahren ist es bevorzugt, Bedingungen zu wählen, die ansonsten für das Beizverfahren bzw. die Beizlösung angegeben sind, also z.B. einen pH-Wert im Bereich von 2,5 bis 4 auszuwählen.

Bei einem mehrstufigen Verfahren kann in einer ersten oder in einer ersten und zweiten Behandlungsstufe eine Entfettung (Vorreinigung) erfolgen, wobei in mindestens einer nachfolgenden Behandlungsstufe mindestens ein Beizen durchgeführt wird. Die Übergänge zwischen dem Entfetten/Reinigen und dem Beizen sind fließend. Häufig treten diese Prozesse gleichzeitig auf. Zwischen der/den Entfettungsstufe(n) und der mindestens einen Beizstufe kann mindestens eine Spülstufe genutzt werden, in der mit Wasser gespült wird. Es hat sich jedoch überraschenderweise gezeigt, dass diese Zwischenspülung(en) entfallen kann/können. Damit kann eine Behandlungsanlage kürzer als üblich gestaltet werden und können die Behandlungskosten verringert werden.

Vorzugsweise wird eine Entfettung mit einer wässerigen Lösung durchgeführt, die - gegebenenfalls ähnlich zusammengesetzt wie die nachfolgend einsetzbare Beizlösung - Hydroxycarbonsäure und Alkalimetallsalz(e) von Hydroxycarbonsäure sowie mindestens ein Tensid enthält, wobei der pH-Wert der Lösung oft bevorzugt im Bereich von 6 bis 10, vorzugsweise im Bereich bis 7 bis 10, liegt und wobei die Gesamtkonzentration an Carbonsäure(n), insbesondere Hydroxycarbonsäure(n), und Alkalimetallsalz(en) von Carbonsäure(n), insbesondere Hydroxycarbonsäure(n), insbesondere im Bereich von 0,1 bis 1 Gew.-% liegt, besonders bevorzugt im Bereich von 0,2 bis 0,5 Gew.-%.

Beim Entfetten, bei dem die erfindungsgemäße Lösung vorwiegend oder nur entfettend wirkt, weisen die wässerigen Lösungen vorzugsweise einen Gehalt an Carbonsäure(n) und Salz(en) von Carbonsäuren, besonders bevorzugt an Hydroxycarbonsäure(n) und Salz(en) von Hydroxycarbonsäuren, insbesondere an Citronensäure und Citrat(en), im Bereich von insgesamt 0,1 bis 20 Gew.-%, vorzugsweise im Bereich von 5 bis 20 Gew.-%, 2 bis 12 Gew.-%, 1 bis 8 Gew.-%, 0,5 bis 6 Gew.-% oder 0,2 bis 5 Gew.-% und einen Gehalt an Tensiden einschließlich Fettaminethoxylaten im Bereich von 0,005 bis 0,5 Gew.-% auf, vorzugsweise im Bereich von 0,01 bis 0,4 Gew.-% oder von 0,05 bis 0,3 Gew.-%. In einem Gemisch von Carbonsäuren und Salz(en) von Carbonsäuren kann der Gehalt an Citronensäure und Citrat(en) im Bereich von 0,1 bis 19,8 Gew.-% liegen, vorzugsweise im Bereich von 0,3 bis 19 Gew.-%, besonders bevorzugt im Bereich von 0,5 bis 16 Gew.-%. Der pH-Wert kann beim Entfetten grundsätzlich im Bereich von etwa 2,5 bis 13 variiert werden.

Beim Beizen, bei dem die erfindungsgemäße Lösung vorwiegend oder nur beizend wirkt, weisen die wässerigen Lösungen vorzugsweise einen Gehalt an Carbonsäure(n) und Salz(en) von Carbonsäuren, besonders bevorzugt an Hydroxycarbonsäure(n) und Salz(en) von Hydroxycarbonsäuren, insbesondere an Citronensäure und Citrat(en), im Bereich von insgesamt 2 bis 20 Gew.-%, vorzugsweise im Bereich von 7 bis 14 Gew.-% oder von 2,5 bis 15 Gew.-%, und einen Gehalt an Tensiden einschließlich Fettaminethoxylaten im Bereich von 0,05 bis 0,5 Gew.-% auf, vorzugsweise im Bereich von 0,1 bis 0,4 Gew.-% an Tensiden. Ein Gehalt an Citronensäure und Citraten im Bereich von insgesamt 8 bis 12 Gew.-% hat sich bei den Versuchen zur Entfernung von Laserzunder hervorragend bewährt. In einem Gemisch von Carbonsäuren und Salz(en) von Carbonsäuren kann der Gehalt an Citronensäure und Citrat(en) im Bereich von 0,5 bis 19,8 Gew.-% liegen, vorzugsweise im Bereich von 1 bis 19 Gew.-%, besonders bevorzugt im Bereich von 2 bis 16 Gew.-%. Beim Beizen kann zwar grundsätzlich auch oft bei pH-Werten bis zu etwa 4 gearbeitet werden, aber bei den vorliegenden Versuchen haben deutlich höhere pH-Werte schlechtere, nämlich fleckige Oberflächen ergeben.

In mehrstufigen Verfahren, die ohne Zwischenspülung(en) zwischen Entfetten und Beizen gefahren werden, hat es sich als besonders empfehlenswert herausgestellt, dass das Gewichtsverhältnis an Carbonsäure(n) und Salz(en) von Carbonsäuren, insbesondere an Citronensäure und Citrat(en), zu allen Tensiden einschließlich Fettaminethoxylaten in diesen Verfahrensstufen in gleicher, ähnlicher oder nur geringfügig modifizierter Größenordnung vorliegt. Dadurch können die entsprechenden Bäder in der Regel problemlos und sicher betrieben werden.

Die erfindungsgemäßen Lösungen können grundsätzlich auf jede mögliche Art appliziert werden, beispielsweise im Fluten, Spritzen oder/und Tauchen, wobei das Spritzen besonders bevorzugt ist. Im Tauchen und bei manchen anderen Applikationsarten ohne stärkere Einwirkung von Luftsauerstoff kann es bei einigen chemischen Systemen erforderlich oder vorteilhaft sein, wenn mindestens ein Oxidationsmittel wie z.B. Wasserstoffperoxid zugesetzt wird.

An das Beizen kann sich beispielsweise ein Spülen, Aktivieren, Spülen, Phosphatieren, Spülen, VE-Wasser-Spülen oder/und Lackieren mit jeweils mindestens einer Prozeßstufe anschließen.

Durchgeführt werden kann das Verfahren beispielsweise in einer klassischen Spritzvorbehandlungsanlage, wie sie in der Oberflächentechnik Stand der Technik ist. Eine solche Anlage kann z.B. folgende Zonen enthalten:

Spritzentfetten I, optional Spritzentfetten II, Spülen I, optional Spülen II, Aktivieren, Phosphatieren, Spülen I, optional Spülen II und VE-Wasser-Spülen. Alternativ kann eine solche Anlage z.B. folgende Zonen enthalten:

Spritzentfetten I, optional Spritzentfetten II, Spülen und Passivieren oder Beölen mit einer Ölemulsion.

Das Passivieren kann beispielsweise mit einer Amin-haltigen oder Silan-haltigen Lösung erfolgen. Anstelle der Aminpassivierung ist u.a. auch eine Passivierung mit Silanen möglich, bei denen sich über Silanole Siloxane oder/und Polysiloxane bilden. Als Passivierung wird eine feste Beschichtung verstanden, die zumindest vorübergehend vor Rost schützen soll und zumindest vorübergehend nicht durch mindestens eine Lackschicht abgedeckt wird.

Dabei sollten jeweils mindestens die Zonen "Spritzentfetten II" und "Spülen" in V2A-Stahl-Qualität (Chrom 18/Nickel 8) oder in noch stärker rostbeständigeren Materialien und beispielsweise die Dichtungen in PTFE oder in Viton^{®} ausgeführt sein.

Das Entfetten erfolgt vorzugsweise alkalisch, insbesondere bei einem pH-Wert im Bereich von 6 bis 10, vorzugsweise im Bereich von 7 bis 9.

Es wurde festgestellt, dass ein derartiges Verfahren gut geeignet ist, Laserzunder von eisenhaltigen Metallteilen, insbesondere von Stahlteilen, in den normalen Spritzzeiten und bei normalen Badtemperaturen zu entfernen. Die hier beschriebene Behandlung der eisenhaltigen Metallteile lässt eine nachfolgende Phosphatierung selbst feinster Trikation-Phosphatierungen auf Basis von ZnMnNi-Phosphat zu, aber auch jede andere Art der Phosphatierung einschließlich Alkaliphosphatierungen wie z.B. eine Eisenphosphatierung. Weiterhin wurde gefunden, dass sich der Eisengehalt in der Lösung bei einem Eisengehalt etwa im Bereich von 0,5 bis 0,6 Gew.-% Badlösung stabilisiert. Das sich beim Beizen von oxidischen Belägen bzw. des Laserzunders lösende Eisen wird bei höheren Eisengehalten als Carbonsäuresalz(e), beispielsweise als Eisencitrat, ausgefällt und kann bei Bedarf abfiltriert werden. Beispielsweise Eisencitrat kann sehr leicht und gut abfiltriert werden. Hierbei ergeben sich über lange Zeit sehr stabile Bad-Eigenschaften.

In manchen Ausführungsformen werden die eisenhaltigen Metallteile vor dem erfindungsgemäßen Beizen vorzugsweise mit einer wässerigen Lösung entfettet, da Öle und Fette die Wirkung des kationischen Tensides mit der Zeit negativ beeinflussen können. Diese Entfettung kann z.B. klassisch mit jedem mildalkalischen oder alkalischen Reiniger durchgeführt werden, wobei anschließend in einer Spülzone gespült wird.

Besonders bevorzugt wird die Entfettung mit einer wässerigen Lösung durchgeführt, die - gegebenenfalls analog der Beizlösung - mindestens eine Carbonsäure, die stark wasserlöslich ist und Fe-lonen komplexiert, und mindestens ein Salz von mindestens einer derartig wirkenden Carbonsäure sowie mindestens ein Fettaminethoxylat enthält. Vorzugsweise enthält die Entfettungslösung Citronensäure und mindestens ein Salz der Citronensäure, besonders bevorzugt mindestens ein Alkalimetallsalz der Citronensäure. Daneben kann die Entfettungslösung auch mindestens ein weiteres Tensid enthalten. Der pH-Wert der Entfettungslösung liegt vorzugsweise im Bereich von 2,5 bis 13, besonders bevorzugt im Bereich von 6 bis 10, ganz besonders bevorzugt im Bereich von 7 bis 9. Die Gesamtkonzentration an derartig wirkenden Carbonsäuren und derartig wirkenden Salzen beträgt vorzugsweise 0,5 bis 15 Gew.-%. Bevorzugt werden dabei die in die Lösung der Entfettungsstufe gelangten Öle und Fette mittels eines Ölseparators entfernt.

Vorzugsweise liegt die erfindungsgemäße wässerige Lösung als ein pufferndes oder/und gepuffertes sowie komplexierendes oder/und komplexiertes System vor, insbesondere zum Beizen.

Dies hat den Vorteil, dass für das Entfetten und Beizen Lösungen von ähnlicher Rezeptur verwendet werden können und dass ein Spülprozess zwischen Entfetten und Beizen dann meistens nicht erforderlich ist.

Das erfindungsgemäße Verfahren kann unter anderem in den bekannten und oftmals bereits bestehenden Spritz-Vorbehandlungsanlagen durchgeführt werden. Auf diese Weise können unter anderem mittels Laser geschnittene eisenhaltige Metallteile auf einfache Art lackiergerecht vorbehandelt werden.

Mit dem erfindungsgemäßen Verfahren wurde ein Flashrusting (schnelles Anrosten) verhindert. Das erfindungsgemäße Verfahren benötigt für das Entfetten oft nur etwa 2 Minuten, für die Entfernung von Laserzunder oft nur etwa 4 bis 6 Minuten, für das Entfetten oder/und Beizen oft nur etwa 4 bis 10 Minuten. Auch andere Oberflächenverunreinigungen wie z.B. Graphit und andere partikuläre Verschmutzungen wie z.B. Abrieb, Läpp- oder/und Poliermittel lassen sich mit diesem Verfahren entfernen.

Der bei den ersten Versuchen entstehende Schlamm war sehr fein, locker und leicht durch Filtrieren entfernbar. Er war als Schlamm auf Basis von Eisencitrat sogar als Dünger einsetzbar, wenn er ausreichend sauber gehalten wurde, z.B. ölfrei und frei von Schwermetallen außer Eisen. Die Tenside lassen sich gegebenenfalls zu bis zu 100 % aus der wässerigen Lösung entfernen.

Es war überraschend, dass mit den erfindungsgemäßen Lösungen auf eine vergleichsweise sehr einfache und kostengünstige Weise mit einem sicheren und sehr umweltfreundlich gestaltbaren Verfahren eine sehr starke Entfettungs- und Beizwirkung erzielt werden kann. Das Bad erwies sich als außergewöhnlich stabil und konnte sehr lange verwendet werden, ohne viele Chemikalien ergänzen zu müssen. Bei geeigneter Gestaltung des Verfahrens lassen sich umweltfreundliche Schlämme gewinnen, die in der Natur weiter verwendet werden können. Der Wasserverbrauch konnte deutlich gesenkt werden. Die auf diese Weise behandelten metallischen Oberflächen insbesondere von Stahl hatten eine hervorragende Qualität. Selbst bei einem stärker mit Eisenionen angereicherten Bad, das schwarz war, ergaben sich ungewöhnlich hochwertige Entfettungs- und Beizresultate.

Der Gegenstand der Erfindung wird anhand der folgenden Beispiele näher erläutert:

### Beispiel 1: Entfernung von Laserzunder an einem Stahlteil mit anschließender Phosphatierung

Ein mittels Laser geschnittenes Bauteil für landwirtschaftliche Geräte aus Stahlblech von 6 mm Materialstärke wurde im Spritzverfahren mit einer Entfettungslösung 3 Minuten bei ca. 50 °C behandelt. Die Entfettungslösung wurde durch Vermischen von 81,70 Gewichtsteilen Wasser, 10,00 Gewichtsteilen Citronensäure, 6,25 Gewichtsteilen Natriumhydroxid, 2,00 Gewichtsteilen NTA-Natriumsalz (Natriumsalz der Nitrilo-Tri-Essigsäure) und 0,05 Gewichtsteilen Laurylamin-Ethoxylat und durch anschließendes Verdünnen von 2 Gewichtsteilen dieser Lösung mit 98 Gewichtsteilen Wasser hergestellt.

Anschließend wurde das Stahlteil im Spritzverfahren mit der Beizlösung 4 Minuten bei ca. 60 °C behandelt. Die Beizlösung wurde durch Vermischen von 41,3 Gewichtsteilen Wasser, 40,0 Gewichtsteilen Citronensäure, 17,7 Gewichtsteilen 30 %-iger Kalilauge, 0,7 Gewichtsteilen Laurylamin-Ethoxylat und 0,3 Gewichtsteilen Fettalkohol (ethoxyliert/propoxyliert) und durch anschließendes Verdünnen von 10 Gewichtsteilen dieser Lösung mit 90 Gewichtsteilen Wasser hergestellt.

Daran schlossen sich in der Oberflächenbehandlung übliche Verfahrensschritte wie Spülen mit Leitungswasser, Aktivieren mit Titanphosphat, Zinkphosphatieren, Spülen und Spülen mit voll entsalztem Wasser (VE-Wasser) an. Wenn hierbei Citronensäure bzw. Citrat in das Phosphatierbad eingeschleppt wurde, wirkte sioh das auf die Zinkphosphatierung infolge Verfeinerung der Phosphatkristalle positiv aus.

### Beispiel 2: Entfernung von Laserzunder an einem Stahlteil mit anschließender Passivierung

Mehrere mittels Laser geschnittene Bauteile für landwirtschaftliche Geräte aus Stahlblech von 6 mm Materialstärke wurden analog Beispiel 1 entfettet und gebeizt sowie mit Leitungswasser gespült. Anschließend wurden die Stahlteile in bekannter Weise mit einer Aminpassivierung versehen, bei der die wässerige Lösung jeweils ein unterschiedliches Amin enthielt. Bei der Passivierung mit jeweils einem Amin konnte jede verwendete Art Amin wie z.B. jeweils mindestens ein Mono-, Di-, Tri- oder/und Polyamin erfolgreich eingesetzt werden, unter anderem auch Dimethylethanolamin, Monoethanolamin und Triethanolamin.

## Patentansprüche

1. Verfahren zum Entfetten, zum Beizen oder/und zur Entfernung von Laserzunder an Oberflächen von eisenhaltigen Metallteilen, **dadurch gekennzeichnet, dass** die eisenhaltigen, gegebenenfalls mit Laserzunder behafteten Oberflächen von metallischen Teilen mit einer wässerigen Lösung, die mindestens eine Carbonsäure, die stark wasserlöslich ist und Fe-lonen komplexiert, und mindestens ein Salz von mindestens einer derartig wirkenden Carbonsäure sowie mindestens ein Fettaminethoxylat enthält, behandelt werden, wobei die Lösung gepuffert wird, wobei Fe-lonen in die Lösung gelangen und zumindest teilweise komplexiert werden, wobei der pH-Wert der Lösung zum Beizen einen gegenüber mindestens einer der enthaltenen Carbonsäuren erhöhten pH-Wert aufweist und wobei die Gesamtkonzentration an den Carbonsäuren und an den Salzen der Carbonsäuren zum Beizen 2 bis 20 Gew.-% beträgt.

2. Verfahren nach Anspruch 1, **dadurch gekennzeichnet, dass** die Lösung einen Gehalt an Hydroxycarbonsäure(n) und Salz(en) von Hydroxycarbonsäure(n), insbesondere an Citronensäure und Citrat(en), zum Entfetten im Bereich von insgesamt 0,1 bis 20 Gew.-% oder zum Beizen im Bereich von insgesamt 2 bis 20 Gew.-% enthält.

3. Verfahren nach Anspruch 1 oder 2, **dadurch gekennzeichnet, dass** als Fettaminethoxylat mindestens ein Kokosfettamin eingesetzt wird.

4. Verfahren nach einem der Ansprüche 1 bis 3, **dadurch gekennzeichnet, dass** die Zugabemenge an Tensid(en) zur Beizlösung im Bereich von 0,5 bis 5 Gew.-% liegt.

5. Verfahren nach einem der Ansprüche 1 bis 4, **dadurch gekennzeichnet, dass** die Lösung neben Kationen zum Puffern des chemischen Systems mindestens eine weitere Verbindung enthält ausgewählt aus der Gruppe, die aus weiteren Komplexbildnern, Beizinhibitoren, Fluoriden, Komplexfluoriden, organischen Lösemitteln, Bioziden, Emulgatoren, Emulsionsspaltern, Entschäumern, Geruchsstoffen, Lösungsvermittlern und Oxidationsmitteln besteht.

6. Verfahren nach einem der Ansprüche 1 bis 5, **dadurch gekennzeichnet, dass** die eisenhaltigen Metallteile vor dem Behandeln mit einer wässerigen Beizlösung entfettet werden.

7. Verfahren nach Anspruch 6, **dadurch gekennzeichnet, dass** die Entfettung mit einer wässerigen Lösung durchgeführt wird, die - gegebenenfalls ähnlich zusammengesetzt wie die nachfolgend einsetzbare Beizlösung - Hydroxycarbonsäure(n) und Salz(e) von Hydroxycarbonsäure(n) sowie mindestens ein Tensid enthält, wobei der pH-Wert der Lösung im Bereich von 6 bis 10 liegt und wobei die Gesamtkonzentration an Hydroxycarbonsäure(n) und Salz(en) von Hydroxycarbonsäure(n) vorzugsweise im Bereich von 0,1 bis 20 Gew.-% liegt.

8. Verfahren nach einem der Ansprüche 1 bis 7, **dadurch gekennzeichnet, dass** der pH-Wert der Lösung zum Beizen im Bereich von 2,5 bis 4,0 liegt.

9. Verfahren nach einem der Ansprüche 1 bis 8, **dadurch gekennzeichnet, dass** das Verfahren in einer Spritzvorbehandlungsanlage durchgeführt wird.

## Claims

1. Process for the degreasing, pickling and/or removal of laser scale on surfaces of ferriferous metal parts, **characterized in that** the ferriferous surfaces of metal parts to which laser scale may be adhering are treated with an aqueous solution containing at least one carboxylic acid which is highly watersoluble and complexes Fe ions, at least one salt of at least one carboxylic acid which acts in such a manner, and at least one fatty amine ethoxylate, wherein the solution is buffered, wherein Fe ions enter the solution and are at least partially complexed, wherein the pH of the pickling solution is higher than that of at least one of the carboxylic acids present, and wherein the total concentration of carboxylic acids and carboxylic acid salts for pickling is 2 to 20 wt.%.

2. Process according to Claim 1, **characterized in that** the solution contains hydroxycarboxylic acid(s) and salt(s) of hydroxycarboxylic acid(s), especially citric acid and citrate(s), in a total amount ranging from 0.1 to 20 wt.% for degreasing or in a total amount ranging from 2 to 20 wt.% for pickling.

3. Process according to Claim 1 or 2, **characterized in that** at least one coconut fatty amine is used as the fatty amine ethoxylate.

4. Process according to one of Claims 1 to 3, **characterized in that** the amount of surfactant(s) added to the pickling solution ranges from 0.5 to 5 wt.%.

5. Process according to one of Claims 1 to 4, **characterized in that**, in addition to cations for buffering the chemical system, the solution contains at least one other compound selected from the group comprising other complexing agents, pickling inhibitors, fluorides, complex fluorides, organic solvents, biocides, emulsifiers, emulsion breakers, defoamers, odour improvers, solubilizers and oxidants.

6. Process according to one of Claims 1 to 5, **characterized in that** the ferriferous metal parts are degreased prior to treatment with an aqueous pickling solution.

7. Process according to Claim 6, **characterized in that** the degreasing is carried out with an aqueous solution which contains hydroxycarboxylic acid(s) and salt(s) of hydroxycarboxylic acid(s) and at least one surfactant (this composition optionally being similar to that of the pickling solution to be used thereafter), the pH of the solution ranging from 6 to 10 and the total concentration of hydroxycarboxylic acid(s) and salt(s) of hydroxycarboxylic acid(s) preferably ranging from 0.1 to 20 wt.%.

8. Process according to one of Claims 1 to 7, **characterized in that** the pH of the pickling solution ranges from 2.5 to 4.0.

9. Process according to one of Claims 1 to 8, **characterized in that** the process is carried out in a spray pretreatment plant.

## Revendications

1. Procédé permettant de dégraisser ou de décaper des surfaces de pièces en métal ferreux et/ou d'en éliminer des battitures causées par laser, **caractérisé en ce que** l'on traite des surfaces de pièces métalliques ferreuses, auxquelles adhèrent éventuellement des battitures causées par un laser, avec une solution aqueuse contenant au moins un acide carboxylique, qui est très soluble dans l'eau et peut complexer les ions de fer, et au moins un sel d'au moins un acide carboxylique qui a ce pouvoir, ainsi qu'au moins une amine grasse éthoxylée, et dans lequel procédé ladite solution est tamponnée, des ions de fer passent dans ladite solution et y sont complexés, au moins en partie, la solution servant au décapage présente un pH augmenté par rapport à au moins l'un des acides carboxyliques présents, et la concentration totale en acides carboxyliques et sels d'acides carboxyliques vaut de 2 à 20 % en poids pour un décapage.

2. Procédé conforme à la revendication 1, **caractérisé en ce que** la solution contient un ou des acide(s) hydroxycarboxylique(s) et un ou des sel(s) d'acide(s) hydroxycarboxylique(s), en particulier de l'acide citrique et un ou des citrate(s), en une proportion pondérale totale de 0,1 à 20 % pour un dégraissage ou de 2 à 20 % pour un décapage.

3. Procédé conforme à la revendication 1 ou 2, **caractérisé en ce que** l'amine grasse éthoxylée utilisée est au moins une amine grasse de coco.

4. Procédé conforme à l'une des revendications 1 à 3, **caractérisé en ce que** la quantité de tensioactif(s) ajoutée à la solution de décapage correspond à une proportion pondérale de 0,5 à 5 %.

5. Procédé conforme à l'une des revendications 1 à 4, **caractérisé en ce que** la solution contient, outre des cations servant à tamponner le système chimique, au moins un autre composé choisi dans l'ensemble constitué par les autres agents complexants et les inhibiteurs de décapage, fluorures, fluorures complexes, solvants organiques, biocides, émulsifiants, agents destructeurs d'émulsion, agents de démoussage, arômes, tiers-solvants et oxydants.

6. Procédé conforme à l'une des revendications 1 à 5, **caractérisé en ce que** l'on dégraisse les pièces métalliques ferreuses, avant de les traiter avec une solution aqueuse de décapage.

7. Procédé conforme à la revendication 6, **caractérisé en ce que** l'on opère le dégraissage avec une solution aqueuse qui est éventuellement de composition similaire à celle de la solution de décapage employée ultérieurement et qui contient un ou des acide(s) hydroxycarboxylique(s) et un ou des sel(s) d'acide(s) hydroxycarboxylique(s), ainsi qu'au moins un tensioactif, et dans lequel procédé le pH de ladite solution vaut de 6 à 10 et la concentration totale en acide(s) hydroxycarboxylique(s) et sel(s) d'acide(s) hydroxycarboxylique(s) vaut de préférence de 0,1 à 20 % en poids.

8. Procédé conforme à l'une des revendications 1 à 7, **caractérisé en ce que** le pH de la solution servant au décapage vaut de 2,5 à 4,0.

9. Procédé conforme à l'une des revendications 1 à 8, **caractérisé en ce qu'**il est mis en oeuvre dans une installation de prétraitement par projection.
